# EUROPEAN PATENT APPLICATION

(11) **EP 3 971 667 A1**
(43) Date of publication of application: **23.03.2022**
(21) Application number: 21196573.6
(22) Date of filing: 14.09.2021
(51) Int. Cl.: G05B 19/418

(54) **PRODUCTION PROCESSING APPARATUS**

(30) Priority: 18.09.2020 JP 2020157236
(71) Applicant: ISHIDA CO., Ltd., Kyoto-shi, Kyoto 606-8392 (JP)
(72) Inventor: Ichikawa, Makoto, Shiga, 520-3026 (JP); Hashimoto, Satoshi, Shiga, 520-3026 (JP); Yamane, Masayuki, Shiga, 520-3026 (JP); Koike, Tomoko, Shiga, 520-3026 (JP)
(74) Representative: Gill Jennings & Every LLP

(57) **Abstract**

The present invention reduces the possibility that poor-quality products are distributed to market. The bag-making and packaging apparatus is a production processing device used in quality management of foodstuffs. The bag-making and packaging apparatus includes a control part, a storage part, and an acquisition part. The control part changes an action performed by the individual parts. The storage part stores an inspection item pertaining to quality management of the foodstuffs. The acquisition part acquires an inspection result pertaining to the inspection item. The control part determines at least one of the following: whether or not the inspection result has been inputted to the acquisition part, whether the input of the inspection results inputted to the acquisition part is normal or not, and whether the inspection result acquired by the acquisition part is good or not. The control part changes the action based on the result of the determination.

## Description

### CROSS-REFERENCE TO RELATED APPLICATIONS

This application claims priority to Japanese Patent Application No. 2020-157236, filed September 18, 2020. The contents of that application are incorporated by reference herein in their entirety.

### TECHNICAL FIELD

The present invention relates to a production processing apparatus.

### BACKGROUND ART

There are production lines for articles in which some articles are randomly picked out from among numerous articles flowing on the production line and the picked out articles are inspected for the purpose of performing a regular quality inspection, as is disclosed in (Japanese Laid-open Patent Publication No. 2002-323367.

When a quality inspection such as that described above is performed, one or more inspection items are sometimes provided in advance. Inspectors perform a quality inspection on articles by inputting inspection results regarding inspection items.

### BRIEF SUMMARY

However, in a quality inspection such as that described above, even when the articles being inspected are actually of poor quality, the inspector sometimes determines the articles being inspected to be good-quality products due to human error. As a result, there is a risk of poor-quality products entering the market.

It is an object of the present invention to provide a production processing apparatus that can reduce the possibility that poor-quality products is distributed to the market.

A production processing apparatus according to a first aspect is a production processing device used in quality management of foodstuffs. The production processing apparatus includes a control part, a storage part, and an acquisition part. The control part changes an action performed by individual parts. The storage part stores an inspection item pertaining to quality management of the foodstuffs. The acquisition part acquires an inspection result pertaining to the inspection item. The control part determines at least one of the following: whether or not the inspection result has been inputted to the acquisition part, whether the input of the inspection result inputted to the acquisition part is normal or not, and whether the inspection result acquired by the acquisition part is good or not. The control part changes the actions based on a result of the determination.

In this production processing apparatus, the control part determines at least one of the following: whether or not the inspection result has been inputted to the acquisition part, whether the input of the inspection result inputted to the acquisition part is normal or not, and whether the inspection result acquired by the acquisition part is good or not. The control part changes the action performed by the individual parts of the production processing apparatus on the basis of the determination results. According to this configuration, the control part can change the action of the individual parts of the production processing apparatus based on the inspection result acquired by the acquisition part. Therefore, it is possible to reduce the possibility that poor-quality products are distributed to the market.

A production processing apparatus according to a second aspect is the production processing apparatus according to the first aspect, further includes a notification part. The notification part prompts an input as to the inspection item. The storage part stores each of the inspection items such that a timing pertaining to the inspection is associated with the inspection item. The control part prompts, with the notification part, the input as to the inspection item which, among the inspection items stored in the storage part, is associated with a timing that precedes a present time and meets a first condition.

According to this configuration, the control part can prompt an inspector to perform input as to the inspection item. Failure to carry out a quality inspection can thereby be reduced. Accordingly, it is possible to reduce the possibility that poor-quality products are distributed to the market.

A production processing apparatus according to a third aspect is the production processing apparatus according to the first or second aspect, wherein the notification part is a display part that displays various pieces of information. The control part causes the notification part to display information pertaining to an input as to the inspection item.

A production processing apparatus according to a fourth aspect is the production processing apparatus according to any of the first through third aspects, wherein the storage part stores each of the inspection items such that a timing pertaining to the inspection is associated with the inspection item. The control part stops the action of the individual parts in a case where a predetermined inspection result has not been acquired as to the inspection item that is associated with a timing, which is after a present time and meets a second condition, in the storage part.

According to this configuration, the control part can more reliably prompt the inspector to perform input as to the inspection item. Failure to carry out a quality inspection can thereby be more reliably reduced. Accordingly, it is possible to reduce the possibility more reliably that poor-quality products are distributed to the market.

A production processing apparatus according to a fifth aspect is the production processing apparatus according to any of the first through fourth aspects, wherein the inspection item includes at least one of a residual nitrogen concentration, mass, a bag thickness, a bag seal condition, presence/absence of scratches, sealability, and date print quality.

A production processing apparatus according to a sixth aspect is the production processing apparatus according to any of the first through fifth aspects, further includes a terminal. The terminal is capable of communicating with the production processing apparatus. The terminal functions as at least one of the storage part, the acquisition part, and the notification part.

This production processing apparatus further includes a terminal that functions as at least one of the storage part, the acquisition part, and the notification part. According to this configuration, the inspector can, through the terminal, see various pieces of information stored in the storage part. Alternatively, the inspector can perform input as to the inspection item through the terminal. Alternatively, the control part can, through the terminal, prompt the inspector to perform input as to the inspection item. Failure to carry out a quality inspection can thereby be reduced. Accordingly, it is possible to reduce the possibility that poor-quality products are distributed to the market.

A production processing apparatus according to a seventh aspect is the production processing apparatus according to the sixth aspect, wherein the storage part stores each of the inspection items such that a timing pertaining to the inspection is associated with the inspection item. The terminal functions as the notification part. The control part transmits to the terminal information prompting input as to the inspection item that is associated with a timing meeting the first condition in the storage part, and causes the terminal to issue a notification of the information.

According to this configuration, the control part can, through the terminal, prompt the inspector to perform input as to the inspection item. Failure to carry out a quality inspection can thereby be more reliably reduced. Accordingly, it is possible to reduce the possibility more reliably that poor-quality products are distributed to the market.

The production processing apparatus according to the present invention can reduce the possibility that poor-quality products are distributed to the market.

### BRIEF DESCRIPTION OF THE DRAWINGS

FIG 1 is a schematic drawing of a configuration of a packaging and inspection system according to the present invention;
FIG 2 is a perspective view of a bag-making and packaging apparatus according to the present invention;
FIG 3 is a schematic drawing of an example of an abnormality in a package; and
FIG 4 is a flowchart of a flow of a quality inspection performed in the packaging and inspection system according.

### DETAILED DESCRIPTION

A packaging and inspection system 100 is described below with reference to the drawings. A bag-making and packaging apparatus 20 serving as an example of a production processing apparatus according to the present invention is used in the packaging and inspection system 100.

The following embodiment is a specific example and is not intended to limit the technical range of the invention; the embodiment can be changed as appropriate within a range that does not deviate from the scope of the invention.

### (1) Overall configuration

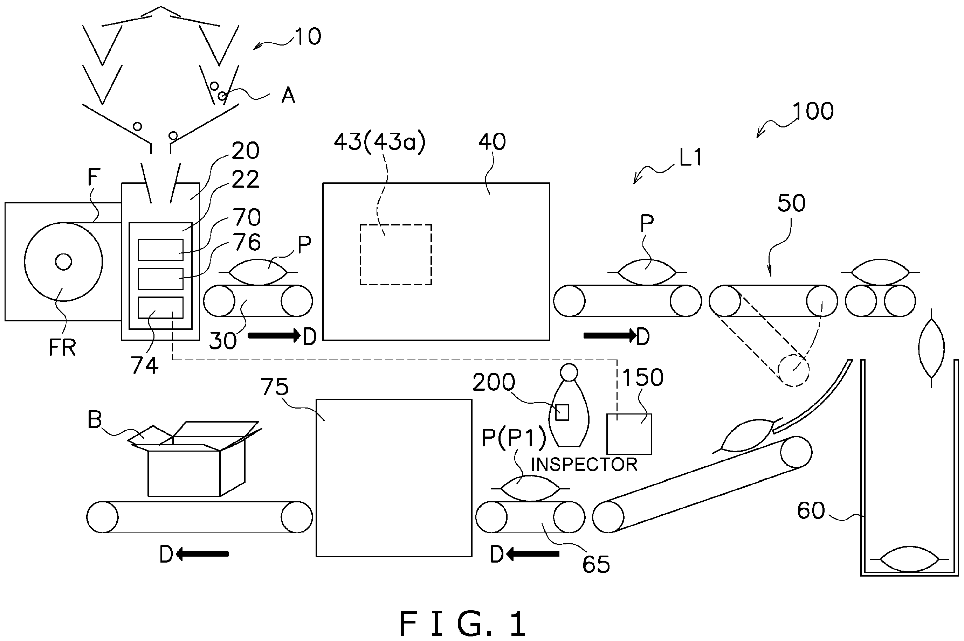

FIG 1 is a schematic drawing of the packaging and inspection system 100 according to the present invention. The packaging and inspection system 100 is a system that inspects packages P for shipping. Actions of individual devices constituting the packaging and inspection system 100 are controlled by a control apparatus (not shown). The packages P are products (bags) manufactured by packaging predetermined weights of foodstuffs A with a film F. The packaging and inspection system 100 has a production line L1. The production line L1 is configured from a weighing scale 10, the bag-making and packaging apparatus 20, a pre-inspection conveyor 30, an inspection section 40, a sorting section 50, a poor-quality product accumulation section 60, a post-inspection conveyor 65, and a boxing apparatus 75 (see FIG. 1). The packaging and inspection system 100 also has a second inspection device 150 that performs an inspection pertaining to an inspection item.

### (2) Detailed configuration

### (2-1) Weighing scale 10

The weighing scale 10 is referred to as a combination weighing scale. The weighing scale 10 measures out predetermined weights of foodstuffs A by combination weighing. In the present embodiment, the foodstuffs A are foodstuffs such as, for example, potato chips. The weighing scale 10 discharges the measured out foodstuffs A downward and supplies the foodstuffs A to the bag-making and packaging apparatus 20.

### (2-2) Bag-making and packaging apparatus 20

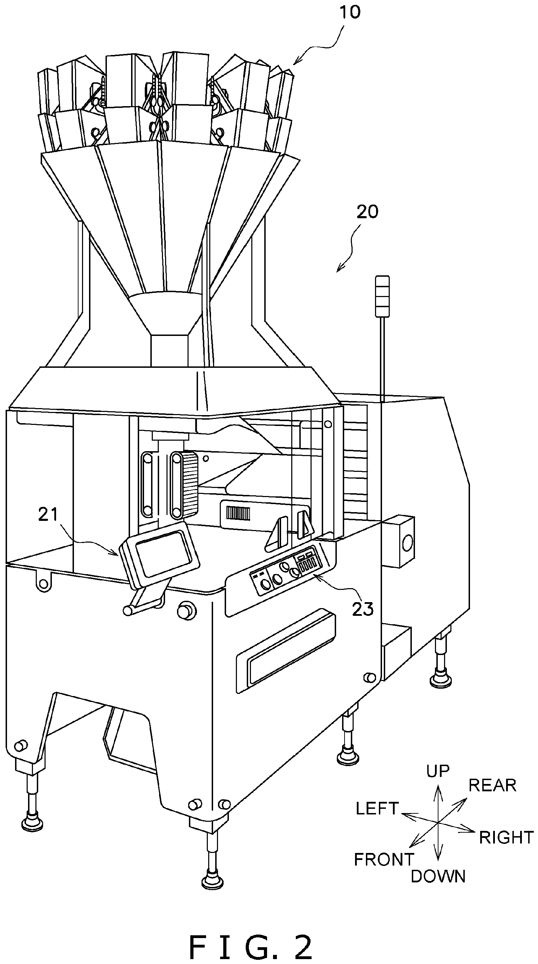

FIG 2 is a perspective view of the bag-making and packaging apparatus 20. The bag-making and packaging apparatus 20 is disposed below the weighing scale 10. The bag-making and packaging apparatus 20 packages the supplied foodstuffs A in the film F in accordance with the timing at which the foodstuffs A are supplied from the weighing scale 10. The bag-making and packaging apparatus 20 manufactures packages P in which foodstuffs A are enclosed by sealing the film F using various sealing mechanisms (not shown). The film F is a thin packaging material in sheet form. In the packaging and inspection system 100 of the present embodiment, a film supply section (not shown) causes a film roll FR to rotate, whereby the film F is supplied to the bag-making and packaging apparatus 20.

The bag-making and packaging apparatus 20 has a notification part 21, a control unit 22, and an operation switch 23. The notification part 21 according to the present embodiment is a touch panel display attached to a front surface of the bag-making and packaging apparatus 20. The notification part 21 functions as a display part that displays various pieces of information pertaining to the packaging and inspection system 100. For example, the notification part 21 can display information pertaining to inputs made concerning inspection items. The control unit 22 is a computer configured from a CPU, ROM, RAM, etc. The control unit 22 has a storage part 70, an acquisition part 74, and a control part 76 as main functional parts. The operation switch 23 is attached to the front surface of the bag-making and packaging apparatus 20. The inspector can input inspection results, various settings, and/or various instructions to the bag-making and packaging apparatus 20 through the operation switch 23.

### (2-2-1) Storage part

The storage part 70 is memory mainly having ROM and RAM. Programs for controlling the actions of the individual parts of the bag-making and packaging apparatus 20, communication protocols used when the bag-making and packaging apparatus 20 communicates with other devices, etc., are stored in the storage part 70. The information stored in the storage part 70 also includes inspection items pertaining to quality management of the foodstuffs A. In the present embodiment, the inspection items stored in the storage part 70 include at least one of the following: a residual nitrogen concentration, mass, bag thickness, a bag seal condition, presence/absence of scratches, sealability, and date print quality. Additionally, the storage part 70 stores each of these inspection items such that a timing pertaining to the inspection is associated with the item.

### (2-2-2) Acquisition part

The acquisition part 74 is a functional part that acquires results of the inspections pertaining to the inspection items. The acquisition part 74 according to the present embodiment acquires at least two types of inspection results. One is an inspection result acquired by manual input by the inspector (sometimes referred to below as a first inspection result). Another is an inspection result inputted from the second inspection device 150 provided to the packaging and inspection system 100 (sometimes referred to below as a second inspection result). The first inspection result is an inspection result that the inspector, having performed an inspection pertaining to an inspection item, manually inputs through the operation switch 23 in regard to a package P that is the object of a quality inspection (sometimes referred to below as an inspected object PI). The second inspection result is an inspection result that is inputted to the acquisition part 74 due to the second inspection device 150, having performed an inspection pertaining to an inspection item in regard to the inspected object PI, transmitting a predetermined signal toward the acquisition part 74.

### (2-2-3) Control part

The control part 76 mainly includes a CPU. The control part 76 controls the actions of the individual parts of the bag-making and packaging apparatus 20 by executing programs stored in the storage part 70. The control part 76 according to the present embodiment determines at least one of the following: whether or not the inspection results have been inputted to the acquisition part 74, whether the inputs of the inspection results inputted to the acquisition part 74 are normal or not, and whether the inspection results acquired by the acquisition part 74 are good or not. In this embodiment, an example is described in which whether or not the inspection results have been inputted to the acquisition part 74, whether the inputs of the inspection results inputted to the acquisition part 74 are normal or not, and whether the inspection results acquired by the acquisition part 74 are good or not are all determined. Specifically, the control part 76 determines that there is "no" input when either the first inspection result or the second inspection result has not been inputted to the acquisition part 74. Additionally, the control part 76 determines that the input is "abnormal" when either the first inspection result or the second inspection result inputted to the acquisition part 74 is not a normal inspection result. For example, when there is an incomplete input for some of the inspection items, it is determined that the input is "abnormal". Additionally, the control part 76 determines that the inspection result is "not good" when the inspected object PI is determined to be a poor-quality product in either the first inspection result or the second inspection result acquired by the acquisition part 74. The control part 76 changes actions performed by the individual parts of the bag-making and packaging apparatus 20 based on these determination results. For example, the control part 76 stops the actions of the individual parts of the bag-making and packaging apparatus 20 when either the first inspection result or the second inspection result has not been inputted to the acquisition part 74, when either the first inspection result or the second inspection result inputted to the acquisition part 74 is not a normal inspection result, or when the inspected object PI is a poor-quality product in either the first inspection result or the second inspection result. Conversely, when the first inspection result and the second inspection result have been inputted, the inputs of the first inspection result and the second inspection result are normal, and the inspected object PI is determined to be a good-quality product in both the first inspection result and the second inspection result, the control part 76 continues the actions of the individual parts of the bag-making and packaging apparatus 20.

The control part 76 controls the notification part 21 so as to prompt the inspector to make an input as to the inspection item. By controlling the notification part 21, the control part 76 prompts input as to an inspection item which, among the inspection items stored in the storage part 70, is associated with a timing that precedes the present time and meets a first condition.

The phrase "prompts input as to an inspection item" may be interpreted to mean "prompts input of information pertaining to an inspection item." Accordingly, the control part 76 may prompt the inspector to input the result of an inspection pertaining to the inspection item by, for example, controlling the notification part 21.

The control part 76 stops the actions of the individual parts of the bag-making and packaging apparatus 20 in a case where a predetermined inspection result (in this embodiment, the first inspection result or the second inspection result) has not been acquired as to the inspection item that is associated with which a timing, which is after the present time and meets a second condition, in the storage part 70. The details are described hereinafter.

### (2-3) Pre-inspection conveyor 30

In the present embodiment, the pre-inspection conveyor 30 is a belt conveyor that carries the packages P discharged from the bag-making and packaging apparatus 20 to the inspection section 40. The pre-inspection conveyor 30 conveys packages P placed on an endless belt while causing the endless belt to rotate via a drive roller driven by a conveyor motor. In FIG 1, the conveying direction of the packages P is indicated by arrow D.

### (2-4) Inspection section 40

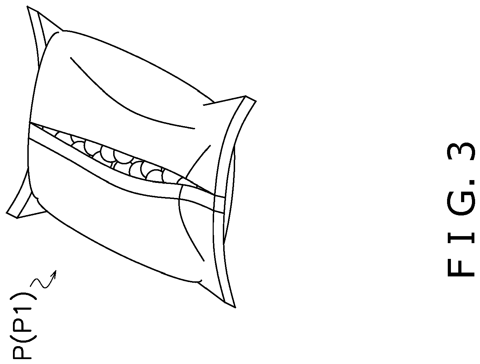

The inspection section 40 inspects whether a package P is a good-quality product or a poor-quality product. The inspection section 40 has a first inspection device 43 and an inspection part conveyor (not shown). The inspection part conveyor conveys the package P conveyed from the pre-inspection conveyor 30 to the first inspection device 43. The first inspection device 43 is, for example, a seal checker 43a that can inspect the condition of the seal of the package P. The seal checker 43a applies pressure to the package P being conveyed from the pre-inspection conveyor 30, in a thickness direction of the package P, and detects a thickness of the package P during the pressure application and determines whether or not the package P is sealed on the basis of the thickness. The seal checker 43a has a servomotor that moves a pressing member toward and away from the inspection part conveyor, and a thickness sensor that detects bag thickness corresponding to angular displacement of the servomotor (the servomotor and the thickness sensor are not shown). The seal checker 43a has a seal checker control part (not shown) that, on the basis of an output signal from the thickness sensor, determines whether or not the thickness of the package P is within a predetermined range (i.e., whether or not the sealing performed by the seal mechanism has been performed normally). As pertains to a package P determined by the seal checker control part that the thickness thereof is outside of the predetermined range, the seal checker 43a determines such a package P to be a poor-quality product that has deficiency or excess of filled air, or an air leak due to poor bag sealing. For example, the seal checker 43a determines that the package P is a poor-quality product when the package P is in a condition such as is shown in FIG. 3.

The seal checker 43a is not provided by way of limitation on the first inspection device 43 of the inspection section 40. For example, the first inspection device 43 of the inspection section 40 may be an X-ray inspection machine capable of inspecting a mass of the package P, a weight checker, a camera capable of sensing positional misalignment of printing or scratches on a bag surface, or a sensor capable of sensing nitrogen concentration.

### (2-5) Sorting section 50

The sorting section 50 sorts poor-quality packages P from good-quality packages P by sorting poor-quality packages P discovered by the inspection section 40 onto a poor-quality product conveyor. The poor-quality packages P are sent to the poor-quality product accumulation section 60 by the poor-quality product conveyor, and good-quality packages P are sent to the post-inspection conveyor 65.

### (2-6) Poor-quality product accumulation section 60

The poor-quality product accumulation section 60 is for accumulating packages P determined to be poor-quality products by the inspection section 40, and preparing these packages to be discarded.

### (2-7) Post-inspection conveyor 65

The post-inspection conveyor 65 is a belt conveyor having a configuration substantially similar to the pre-inspection conveyor 30. The post-inspection conveyor 65 carries packages P determined by the inspection section 40 to be good-quality products to the boxing apparatus 75. In the present embodiment, the inspector performs a quality inspection on packages P moving on the post-inspection conveyor 65. In other words, the inspector performs a quality inspection on packages P conveyed as good-quality products. The details are described hereinafter.

### (2-8) Boxing apparatus 75

The boxing apparatus 75 is an apparatus that packs packages P conveyed from the post-inspection conveyor 65 into a cardboard box B shaped by a box-making section (not shown), and sends the cardboard box B packed with a predetermined numerical quantity of packages P to a production line located further downstream.

### (2-9) Second inspection device 150

The second inspection device 150 is a device used when a quality inspection is performed by the inspector. The second inspection device 150 can perform inspections pertaining to inspection items. The second inspection device 150 is, for example, an X-ray inspection machine capable of sensing the mass of the packages P, a weight checker, a seal checker capable of sensing the thickness, seal condition, or sealability of the packages P, a camera capable of sensing positional misalignment of printing or scratches on a bag surface, or a sensor capable of sensing nitrogen concentration. The second inspection device 150 determines whether the packages P are good-quality products or poor-quality products by performing an inspection pertaining to an inspection item. The result of the inspection performed by the second inspection device 150 is sent as a second inspection result to the acquisition part 74.

### (3) Inspection of articles in the packaging and inspection system

Below is a description of an article quality inspection performed in the packaging and inspection system 100 according to the present embodiment. In the packaging and inspection system 100 according to the present embodiment, the control part 76 prompts the inspector to perform an inspection. Prompted by the control part 76, the inspector randomly extracts a package P from among the numerous packages P moving on the post-inspection conveyor 65, and performs an inspection on the extracted package P (inspected object PI). Additionally, the inspector transports the package P (inspected object PI) extracted from the post-inspection conveyor 65 to the second inspection device 150 and performs an inspection on the inspected object PI using the second inspection device 150. The details are described below.

The storage part 70 according to the present embodiment stores inspection items pertaining to quality management of the foodstuffs A. For example, the storage part 70 according to the present embodiment stores a "bag seal condition" as an inspection item. Additionally, the storage part 70 stores each of the inspection items such that a timing pertaining to an inspection is associated with the item. Accordingly, the storage part 70 according to the present embodiment stores the "bag seal condition" such that a timing pertaining to the inspection thereof is associated with the "bag seal condition." For the sake of convenience in the description, the timing stored in association with the "bag seal condition" is referred to below as a first timing.

The control part 76 according to the present embodiment can control the actions of the individual parts of the bag-making and packaging apparatus 20. For example, the control part 76 can control the actions of the notification part 21. Specifically, the control part 76 can, by controlling the actions of the notification part 21, cause the notification part 21 to display information pertaining to inputs made in regard to inspection items. More specifically, in a case where there is an inspection item with which a timing that precedes the present time and meets a first condition is associated during operation in the packaging and inspection system 100, the control part 76 can prompt the inspector via the notification part 21 to input the result of the inspection pertaining to that inspection item. The first condition is a condition stored in the storage part 70. In the present embodiment, the first condition is, for example, that "a predetermined time has elapsed since an inspection result was last acquired." The details of the first condition can be modified, as appropriate, as long as such changes do not deviate from the scope and range of the present invention.

Accordingly, when, for example, the first timing matches a timing that precedes the present time and a predetermined time has elapsed since an inspection result was last acquired, the control part 76 can prompt the inspector via the notification part 21 to input the result of the inspection pertaining to the "bag seal condition." For example, the control part 76 causes the notification part 21, which functions as a display part, to display a message prompting an inspection.

The inspector, prompted by the control part 76 to input the result of the inspection pertaining to the "bag seal condition," performs the inspection pertaining to the "bag seal condition" on the inspected object PI. For example, the inspector visually or manually confirms that air has not leaked due to poor sealing in the inspected object PI, that there has been no biting in the seal portion of the inspected object PI, and others. Having performed the inspection pertaining to the "bag seal condition," the inspector inputs the inspection result via the operation switch 23. Specifically, as pertains to the inspection item referred to as the "bag seal condition," the inspector inputs whether the inspected object PI is a good-quality product or a poor-quality product. The acquisition part 74 thereby acquires the first inspection result. Thus, in the present embodiment, the first inspection result is acquired via the operation switch 23. In other words, the first inspection result is acquired without using a paper medium. Therefore, in the packaging and inspection system 100 according to the present embodiment, paper media consumption can be suppressed. The "bag seal condition" is merely one example of an inspection item with which a timing that meets the first condition is associated, and is not provided by way of limitation as to the type and numerical quantity of inspection items with which a timing that meets the first condition is associated. Additionally, in a case where there are a plurality of inspection items with which a timing that meets the first condition is associated, and there has not been normal input of inspection results, such as a case in which there has been an input of inspection results for a part of the inspection items but there has not been an input of inspection results for the other part of the inspection items (when there is an incomplete input), the control part 76 stops the actions of the individual parts of the bag-making and packaging apparatus 20. Therefore, in the present embodiment, the inputting of abnormal inspection results by the inspector due to human error is reduced.

Next, the inspector, having inputted the first inspection result, performs an inspection on the inspected object PI using the second inspection device 150. The second inspection device 150 is a device that can perform an inspection pertaining to an inspection item. The second inspection device 150 according to the present embodiment is a device having substantially the same function as, for example, the seal checker 43a. Therefore, the second inspection device 150 according to the present embodiment can perform the inspection pertaining to the "bag seal condition" in the same manner as the seal checker 43a. The result of the inspection performed by the second inspection device 150 is sent as the second inspection result to the acquisition part 74. Specifically, as pertains to the inspection item referred to as the "bag seal condition," whether the inspected object PI is a good-quality product or a poor-quality product is inputted as the second inspection result from the second inspection device 150 to the acquisition part 74. The acquisition part 74 thereby acquires the second inspection result.

In the present embodiment, the control part 76 determines whether or not the acquisition part 74 has acquired a predetermined inspection result for an inspection item with which a timing that follows the present time and meets a second condition is associated in the storage part 70. The second condition is a condition stored in the storage part 70. In the present embodiment, the second condition is, for example, that "a predetermined time has elapsed with the first condition being met." The details of the second condition can be modified, as appropriate, as long as such modifications do not deviate from the scope and range of the present invention. Additionally, the "predetermined inspection result" is, for example, the first inspection result and the second inspection result.

In other words, the control part 76 according to the present embodiment determines whether or not the acquisition part 74 has acquired the first inspection result and the second inspection result for the "bag seal condition" in a case where the first timing is a timing that is after the present time and at which a predetermined time has elapsed since an inspection result was last acquired. In this embodiment, when the acquisition part 74 has not acquired the predetermined inspection result (the first inspection result and the second inspection result), it is determined that the inspection result has not been inputted to the acquisition part 74 and the actions of the individual parts of the bag-making and packaging apparatus 20 are stopped.

To summarize the above, the control part 76 according to the present embodiment prompts the inspector to perform an inspection pertaining to an inspection item (the "bag seal condition" in this case), and stops the actions of the individual parts of the bag-making and packaging apparatus 20 in a case where a result of the inspection pertaining to the inspection item (the first inspection result and the second inspection result) has not been obtained (the inspector has not performed the inspection). Therefore, in the present embodiment, failure to carry out a quality inspection can be reduced.

Next, the control part 76 determines whether the inspection result is good or not based on the first inspection result and the second inspection result acquired by the acquisition part 74. The control part 76 according to the present embodiment determines that the inspection result is "not good" when the inspected object PI is determined to be a poor-quality product in either the first inspection result or the second inspection result. For example, when the inspected object PI is determined to be a good-quality product in the first inspection result and the inspected object PI is determined to be a poor-quality product in the second inspection result, the control part 76 determines that the inspection result is "not good". Conversely, when the inspected object PI is determined to be a good-quality product in both the first inspection result and the second inspection result, the control part 76 determines that the inspection result is "good".

The control part 76 according to the present embodiment changes the actions of the individual parts of the bag-making and packaging apparatus 20 based on the determination result. For example, the control part 76 continues the operation of the bag-making and packaging apparatus 20 when the determination result is "good". Conversely, the control part 76 stops the actions of the individual parts of the bag-making and packaging apparatus 20 when the determination result is "not good".

As is described above, in the packaging and inspection system 100 according to the present embodiment, the control part 76 determines whether the inspection result is good or not based on the first inspection result and the second inspection result. The first inspection result is an inspection result obtained from the inspection performed by the inspector. The second inspection result is an inspection result obtained from the inspection performed by the second inspection device 150. The control part 76 determines that there is "no" input and stops the actions of the individual parts of the bag-making and packaging apparatus 20 when either the first inspection result or the second inspection result has not been acquired. Therefore, with the packaging and inspection system 100 according to the present embodiment, failure to carry out a quality inspection can be reduced. Additionally, the control part 76 determines that the input is "abnormal" when either the first inspection result or the second inspection result has not been inputted normally. Therefore, with the packaging and inspection system 100 according to the present embodiment, instances of the inspector inputting an abnormal inspection result due to human error are reduced. Additionally, the control part 76 determines that the inspection result is "not good" and stops the actions of the individual parts of the bag-making and packaging apparatus 20 when the inspected object PI is determined to be a poor-quality product in either the first inspection result or the second inspection result. Therefore, with the packaging and inspection system 100 according to the present embodiment, even when the inspector determines a poor-quality inspected object PI to be a good-quality product due to human error, the actions of the individual parts of the bag-making and packaging apparatus 20 can be stopped due to the inspected object PI being determined to be a poor-quality product in the second inspection result. Accordingly, it is possible to reduce the possibility that poor-quality packages P are distributed to the market.

### (4) Flow of quality inspection in the packaging and inspection system

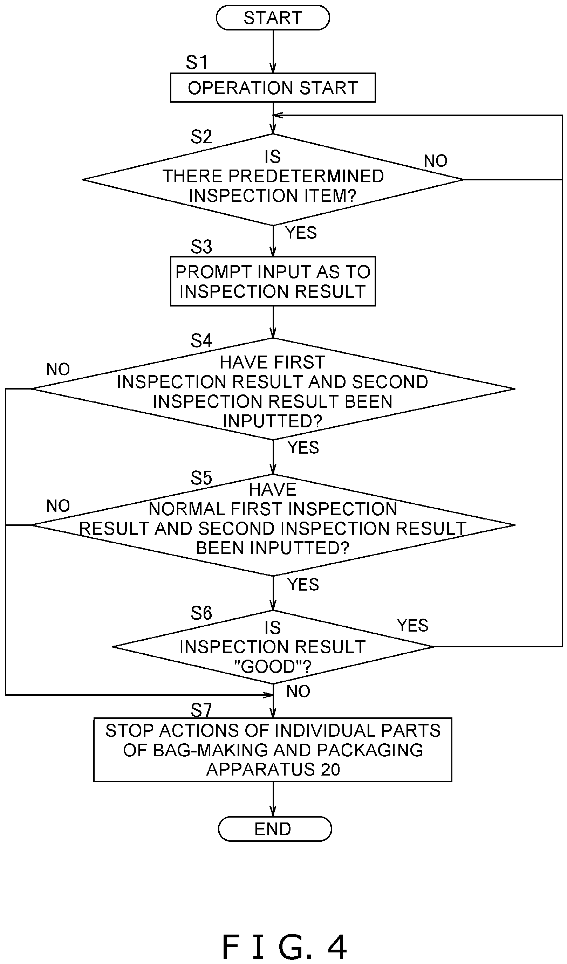

The flow of article quality inspection performed in the packaging and inspection system 100 shall be described in a simple manner using a flowchart shown in FIG 4. The flowchart shown in FIG 4 is merely one example, and may be modified, as appropriate, provided that there are no contradictions. For example, other steps not depicted may be included before and after the depicted steps, and the sequence of steps may be changed, as appropriate, within a range such that the steps do not contradict each other.

In step S1, the operation of the packaging and inspection system 100 using the bag-making and packaging apparatus 20 is started.

In step S2, the control part 76 determines whether or not there is an inspection item (written as a "predetermined inspection item" in FIG 4) with which a timing that precedes the present time and meets the first condition is associated. When the determination is Yes in step S2, the process of the control part 76 advances to step S3. When the determination is No in step S2, the operation of the bag-making and packaging apparatus 20 is continued.

In step S3, the control part 76 prompts the inspector to input the result of the inspection pertaining to the inspection item with which the timing that precedes the present time and meets the first condition is associated.

In step S4, the control part 76 determines whether or not the acquisition part 74 has acquired the first inspection result and the second inspection result for the inspection item for which the inspection is prompted in step S3. In other words, the control part 76 determines whether or not the first inspection result and the second inspection result were inputted to the acquisition part 74. When the first inspection result and the second inspection result have been inputted to the acquisition part 74 (when the determination is Yes in step S4), the process of the control part 76 advances to step S5. When either the first inspection result or the second inspection result has not been inputted (when the determination is No in step S4), the process of the control part 76 advances to step S7.

In step S5, the control part 76 determines whether or not the inputs of the first inspection result and the second inspection result are normal. When the first inspection result and the second inspection result have been normally inputted to the acquisition part 74 (when the determination is Yes in step S5), the process of the control part 76 advances to step S6. When either the first inspection result or the second inspection result has not been normally inputted to the acquisition part 74 (when the determination is No in step S5), the process of the control part 76 advances to step S7.

In step S6, the control part 76 performs a determination whether the inspection result is good or not based on the first inspection result and the second inspection result acquired by the acquisition part 74. When the inspection result is "good" (when the determination is Yes in step S6), the process of the control part 76 returns to step S2. In other words, when the inspection result is "good", the control part 76 continues the operation of the bag-making and packaging apparatus 20. Conversely, when the inspection result is "not good" (when the determination is No in step S6), the process of the control part 76 advances to step S7.

In step S7, the control part 76 stops the actions of the individual parts of the bag-making and packaging apparatus 20.

### (5) Characteristics

### (5-1)

The production processing apparatus according to the present embodiment is a production processing apparatus used in quality management for foodstuffs A. The production processing apparatus includes the control part 76, the storage part 70, and the acquisition part 74. The control part 76 changes the action performed by the individual parts. The storage part 70 stores the inspection item pertaining to the quality management for the foodstuffs A. The acquisition part 74 acquires the inspection result pertaining to the inspection item. The control part 76 determines at least one of the following: whether or not the inspection result has been inputted to the acquisition part 74, whether the input of the inspection result inputted to the acquisition part 74 is normal or not, and whether the inspection result acquired by the acquisition part 74 is good or not. The control part 76 changes the actions based on the determination results. In the present embodiment, the production processing apparatus is a bag-making and packaging apparatus 20.

In this bag-making and packaging apparatus 20, the control part 76 determines at least one of the following: whether or not the inspection result has been inputted to the acquisition part 74, whether the input of the inspection result inputted to the acquisition part 74 is normal or not, and whether the inspection results acquired by the acquisition part 74 is good or not. The control part 76 changes the actions performed by the individual parts of the bag-making and packaging apparatus 20 based on the determination results. According to this configuration, the control part 76 can change the actions of the individual parts of the bag-making and packaging apparatus 20 based on the inspection results acquired by the acquisition part 74. Therefore, it is possible to reduce the possibility that poor-quality products are distributed to the market.

### (5-2)

The bag-making and packaging apparatus 20 according to the present embodiment includes the notification part 21. The notification part 21 prompts the input as to the inspection item. The storage part 70 stores each of the inspection items such that a timing pertaining to the inspection is associated with the inspection item. The control part 76 prompts, with the notification part 21, the input as to the inspection item which, among the inspection items stored in the storage part 70, is associated with a timing that precedes the present time and meets the first condition.

According to this configuration, the control part 76 can prompt the inspector to perform input as to the inspection item. Failure to carry out a quality inspection can thereby be reduced. Accordingly, it is possible to reduce the possibility that poor-quality products are distributed to the market.

### (5-3)

In the bag-making and packaging apparatus 20 according to the present embodiment, the notification part 21 is a display part that displays various pieces of information. The control part 76 causes the notification part 21 to display information pertaining to the input as to the inspection item.

### (5-4)

In the bag-making and packaging apparatus 20 according to the present embodiment, the storage part 70 stores each of the inspection items such that a timing pertaining to the inspection is associated with the inspection item. The control part 76 stops the actions of the individual parts in a case where a predetermined inspection result has not been acquired as to the inspection item that is associated with a timing, which is after the present time and meets the second condition, in the storage part 70.

According to this configuration, the control part 76 can more reliably prompt the inspector to perform input as to the inspection item. Failure to carry out a quality inspection can thereby be more reliably reduced. Accordingly, it is possible to reduce the possibility more reliably that poor-quality products are distributed to the market.

### (5-5)

In the bag-making and packaging apparatus 20 according to the present embodiment, the inspection item includes at least one of a residual nitrogen concentration, mass, a bag thickness, a bag seal condition, presence/absence of scratches, sealability, and date print quality.

### (6) Modifications

The above embodiment can be modified, as appropriate, as shown in the following modifications. Constituent elements similar to those of the above embodiment are denoted by identical symbols and are not described in detail.

### (6-1) Modification A

The above embodiment described the bag-making and packaging apparatus 20, which served as one example of the production processing apparatus. However, the bag-making and packaging apparatus 20 is not provided by way of limitation of the production processing apparatus. Accordingly, for example, the present invention may be applied to a combination weighing apparatus, an inspection apparatus, etc. In addition, the present invention can be applied to various apparatuses used in foodstuff management.

### (6-2) Modification B

The above embodiment described an example of a control part 76 that stops the actions of the individual parts of the bag-making and packaging apparatus 20 when inspection results have not been inputted, inputs of inspection results have not been made normally, or inspection results are "not good". However, this example is not provided by way of limitation as to the manner of control performed by the control part 76. For example, the control part 76 may prompt the inspector to carry out another quality inspection when inspection results have not been inputted, inputs of inspection results have not been made normally, or inspection results are "not good". In other words, the control part 76 may prompt carrying out of another inspection as one example of a change to an action.

The control part 76 may stop the actions of the individual parts of the bag-making and packaging apparatus 20 when the first inspection result and/or the second inspection result is not inputted despite the prompting of another inspection, when the first inspection result and/or the second inspection result inputted to the acquisition part 74 after the prompting of another inspection is not a normal inspection result, or when "not good" is the result of the correctness determination performed based on the first inspection result and the second inspection result inputted to the acquisition part 74 after the prompting of another inspection.

### (6-3) Modification C

The above embodiment described an example in which the inspection item stored in the storage part 70 includes at least one of the following: a residual nitrogen concentration, mass, a bag thickness, bag seal condition, presence/absence of scratches, sealability, and date print quality.

However, a residual nitrogen concentration, mass, a bag thickness, bag seal condition, presence/absence of scratches, sealability, and date print quality are not provided by way of limitations as to the inspection items stored in the storage part 70. The storage part 70 can store various inspection items.

### (6-4) Modification D

The above embodiment described a storage part 70 that stores the "bag seal condition" as an inspection item in order to make the description easy to understand. However, the "bag seal condition" is not provided by way of limitation as to the inspection item stored by the storage part 70; the storage part 70 may store a plurality of inspection items.

When the storage part 70 stores a plurality of inspection items, the timings pertaining to the inspection items stored by the storage part 70 may each be a different timing. For example, the timings of the inspection items may be stored such that a quality inspection frequency is high for inspection items that have a high frequency of indicating poor-quality products, and the quality inspection frequency is low for inspection items that have a low frequency of indicating poor-quality products.

When the storage part 70 stores a plurality of inspection items, the first condition may be set such that the frequency of meeting the first condition is high for inspection items that have a high frequency of indicating poor-quality products, and the frequency of meeting the first condition is low for inspection items that have a low frequency of indicating poor-quality products.

When the storage part 70 stores a plurality of inspection items, the second inspection device 150 may be a device that can perform inspections pertaining to the plurality of inspection items.

### (6-5) Modification E

Though not described in the above embodiment, the bag-making and packaging apparatus 20, which serves as one example of the production processing apparatus, may further comprise a terminal 200 capable of communicating with the bag-making and packaging apparatus 20. A detailed description is given below.

The terminal 200 according to the present modification is, for example, a tablet or another form of terminal. The terminal 200 can function as at least one of the following: the storage part 70, the acquisition part 74, and the notification part 21. The present modification describes a terminal 200 having the functions of the storage part 70, the acquisition part 74, and the notification part 21.

In the present modification, the inspector can, through the terminal 200, check various pieces of information stored in the storage part 70. For example, the inspector can check the timings of inputs for inspection results through the terminal 200. Therefore, for example, the inspector can, through the terminal 200, check the timings of inputs of the results of inspections pertaining to inspection items even when the inspector has temporarily moved away from the bag-making and packaging apparatus 20. According to this configuration, instances of the inspector forgetting to input inspection items can be reduced. In other words, failure to carry out a quality inspection can be reduced.

In the present modification, the control part 76 can, through the terminal 200 functioning as the notification part 21, prompt the inspector to make inputs as to the inspection items. Therefore, the control part 76 can prompt the inspector to make the inputs as to the inspection items even when, for example, the inspector has temporarily moved away from the bag-making and packaging apparatus 20. According to this configuration, instances of the inspector forgetting to input inspection items can be reduced. In other words, failure to carry out a quality inspection can be reduced.

In the present modification, the inspector can input inspection results through the terminal 200 functioning as the acquisition part 74. Therefore, even when, for example, the inspector is present away from the bag-making and packaging apparatus 20 and the inspector observes the packages P moving on the production line L1 using an observation camera (not shown), a monitor (not shown), etc., the inspector, having confirmed the inspected object PI through the monitor, can input the inspection results to the terminal 200. According to this configuration, a quality inspection can be performed easily even when the inspector is present away from the bag-making and packaging apparatus 20. In other words, failure to carry out a quality inspection can be reduced.

Thus, with the bag-making and packaging apparatus 20 according to the present modification, failure to carry out a quality inspection can be reduced, as with the bag-making and packaging apparatus 20 according to the above embodiment. Accordingly, it is possible to reduce the possibility that poor-quality products are distributed to the market.

### (6-5-1)

The example of the terminal 200 functioning as the notification part 21 shall be described in further detail.

The storage part 70 according to the present modification stores each of the inspection item such that a timing pertaining to the inspection is associated with the inspection item, as with the storage part 70 according to the above embodiment. The control part 76 according to the present modification can transmit to the terminal 200 information prompting input as to an inspection item with which a timing meeting the first condition is associated in the storage part 70, and can cause the terminal 200 to issue a notification. Therefore, it is possible to prompt the inspector to make the input as to the inspection item with which a timing meeting the first condition is associated in the storage part 70 even when, for example, the inspector has temporarily moved away from the bag-making and packaging apparatus 20.

According to this configuration, the control part 76 can, through the terminal 200, prompt the inspector to make the input as to the inspection item. Failure to carry out a quality inspection can thereby be more reliably reduced. Accordingly, it is possible to reduce the possibility more reliably that poor-quality products are distributed to the market.

### (6-6) Modification F

In the above embodiment, the first condition is described as "a predetermined time has elapsed since an inspection result was last acquired." Additionally, the second condition is described as "a predetermined time has elapsed with the first condition being met."

However, the above example is not provided by way of limitation as to the first condition. For example, the first condition may be that "a predetermined number of packages P has been produced since an inspection result was last acquired."

The above example is also not provided by way of limitation as to the second condition. For example, the second condition may be that "a predetermined number of packages P has been produced with the first condition being met."

### (6-7) Modification G

The above embodiment described a bag-making and packaging apparatus 20 comprising an acquisition part 74 that acquires a first inspection result and a second inspection result. However, this example is not provided by way of limitation as to examples of the acquisition part 74. For example, the acquisition part 74 may acquire a result of an inspection in the inspection section 40 as a third inspection result. In this case, the control part 76 may determine whether the inspection result is good or not based on the the first inspection result, the second inspection result, and the third inspection result.

In the present modification, when the inspector inputs the first inspection result through the operation switch 23, the inspector inputs individual identification information added to the inspected object PI. Alternatively, in the present modification, the second inspection device 150 is configured so as to be capable of reading individual identification information of the inspected object PI, and having read the individual identification information of the inspected object PI, the second inspection device 150 transmits the individual identification information of the inspected object PI along with the second inspection result to the acquisition part 74. Thus, the acquisition part 74, having acquired the individual identification information of the inspected object PI, can, on the basis of the individual identification information, acquire the third inspection result from inspection data recorded in the inspection section 40.

In the bag-making and packaging apparatus 20 according to the present modification, whether the inspection result is good or not is determined based on the first inspection result, the second inspection result, and the third inspection result. Therefore, it is easy to sense any abnormalities occurring in the inspection section 40.

### (6-8) Modification H

The above embodiment described a control part 76 that stops the actions of the individual parts of the bag-making and packaging apparatus 20 when an inspection result has not been inputted, when an input of an inspection result has not been made normally, or when an inspection result is "not good" in quality. However, this example is not provided by way of limitation as to examples of the control of the control part 76. For example, the control part 76 may, when stopping the actions of the individual parts of the bag-making and packaging apparatus 20, communicate with the control apparatus controlling the actions of the individual devices configuring the packaging and inspection system 100 so as to stop the actions of the individual parts of the bag-making and packaging apparatus 20 and stop the actions of the individual devices configuring the packaging and inspection system 100.

### (6-9) Modification I

The above embodiment described a control part 76 that determines all of the following: whether or not the inspection result has been inputted to the acquisition part 74, whether the input of the inspection result inputted to the acquisition part 74 are normal or not, and whether the inspection result acquired by the acquisition part 74 is good or not.

However, this example is not provided by way of limitation as to examples of the control of the control part 76; the control part 76 may perform one determination among whether or not the inspection result has been inputted to the acquisition part 74, whether the input of the inspection result inputted to the acquisition part 74 is normal or not, and whether the inspection result acquired by the acquisition part 74 is good or not, and the control part 76 may change the actions of the individual parts of the bag-making and packaging apparatus 20 based on this determination result. For example, the control part 76 may be designed so as to perform only the determination of whether the inspection result acquired by the acquisition part 74 is good or not, and change the actions of the individual parts of the bag-making and packaging apparatus 20 based on this determination result.

### <Other embodiments>

An embodiment according to the present invention is described above, but it should be understood that various changes to the configurations and details of the invention can be made without deviating from the scope and range of the claims.

The present invention is not limited to the above unmodified embodiments. At the implementation stage, the present invention can be embodied by modifying the configurational elements within a range that does not deviate from the scope of the invention. Additionally, the present invention can have various disclosures devised through appropriate combinations of the plurality of configurational elements disclosed in the above embodiments. For example, some configurational elements may be excluded from all of the configurational elements presented in the embodiment. Furthermore, configurational elements of different embodiments may be combined as appropriate. Accordingly, the present embodiment is merely one example in every respect and should be considered not to be provided by way of limitation, and any revisions that would be obvious to a person skilled in the art are thereby meant to be included in the embodiment.

### REFERENCE SIGNS LIST

- 20: Bag-making and packaging apparatus (production processing apparatus)
- 21: Notification part
- 70: Storage part
- 74: Acquisition part
- 76: Control part
- 200: Terminal

### CITATION LIST

### PATENT LITERATURE

Patent Literature 1: Japanese Laid-open Patent Publication No. 2002-323367

## Claims

1. A production processing apparatus used in quality management of foodstuffs, the production processing apparatus comprising:
a control part configured to change an action performed by individual parts of the production processing apparatus;
a storage part configured to store an inspection item pertaining to quality management of the foodstuffs; and
an acquisition part configured to acquire an inspection result pertaining to the inspection item,
the control part configured to determine at least one of the following: whether or not the inspection result has been inputted to the acquisition part, whether the input of the inspection result inputted to the acquisition part is normal or not, and whether the inspection result acquired by the acquisition part is good or not, and the control part configured to change the action based on a result of the determination.

2. The production processing apparatus according to claim 1, further comprising a notification part configured to prompt an input as to the inspection item,
wherein
the storage part is configured to store each of the inspection item such that a timing pertaining to the inspection is associated with the inspection item, and
the control part is configured to prompt, with the notification unit, the input as to the inspection item which, among the inspection items stored in the storage part, is associated with a timing that precedes a present time and meets a first condition.

3. The production processing apparatus according to claim 1 or 2, wherein
the notification part is a display part that is configured to display various pieces of information, and
the control part is configured to cause the notification part to display information pertaining to an input as to the inspection item.

4. The production processing apparatus according to any of the claims 1 to 3, wherein
the storage part is configured to store each inspection item such that a timing pertaining to the inspection is associated with the inspection item, and
the control part is configured to stop the action of the individual parts of the production processing apparatus in a case where a predetermined inspection result has not been acquired as to the inspection item that is associated with a timing, which is after a present time and meets a second condition, in the storage part.

5. The production processing apparatus according to any of claims 1 to 4, wherein
the inspection item includes at least one of a residual nitrogen concentration, mass, bag thickness, a bag seal condition, presence/absence of scratches, sealability, and date print quality.

6. The production processing apparatus according to any of claims 1 to 5, further comprising
a terminal capable of communicating with the production processing apparatus,
the terminal configured to function as at least one of the storage part, the acquisition part, and the notification part.

7. The production processing apparatus according to claim 6, wherein
the storage part is configured to store each of the inspection item such that a timing pertaining to the inspection is associated with the inspection item,
the terminal is configured to function as the notification part, and
the control part is configured to transmit to the terminal information prompting input as to the inspection item that is associated with a timing meeting the first condition in the storage part, and is configured to cause the terminal to issue a notification of the information.
